Europäisches Patentamt

European Patent Office

Office européen des brevets

(19)

(11) EP 1 463 980 B1

## (12) FASCICULE DE BREVET EUROPEEN

(45) Date de publication et mention
de la délivrance du brevet:
**05.04.2006 Bulletin 2006/14**

(21) Numéro de dépôt: 03712228.0

(22) Date de dépôt: **09.01.2003**

(51) Int Cl.:
*G05B 17/02* (2006.01)     *G06F 3/00* (2006.01)

(86) Numéro de dépôt international:
**PCT/FR2003/000054**

(87) Numéro de publication internationale:
**WO 2003/058358 (17.07.2003 Gazette 2003/29)**

(54) **PROCEDE ET SYSTEME DE COMMANDE DYNAMIQUE D UN ELEMENT A RETO   UR D EFFORT**

VERFAHREN UND SYSTEM ZUR DYNAMISCHEN STEUERUNG EINES
KRAFTRÜCKKOPPLUNGSELEMENTS

METHOD AND SYSTEM FOR DYNAMICALLY CONTROLLING A FORCE-FEEDBACK ELEMENT

(84) Etats contractants désignés:
**AT BE BG CH CY CZ DE DK EE ES FI FR GB GR
HU IE IT LI LU MC NL PT SE SI SK TR**

(30) Priorité: **09.01.2002 FR 0200216**

(43) Date de publication de la demande:
**06.10.2004 Bulletin 2004/41**

(73) Titulaire: **FRANCE TELECOM
75015 Paris (FR)**

(72) Inventeurs:
• **HENNION, Bernard
F-38410 Saint Martin d'Uriage (FR)**
• **GUERRAZ, Agnès
F-38450 Le Gua (FR)**

(74) Mandataire: **Loisel, Bertrand et al
Cabinet Plasseraud
65/67 rue de la Victoire
75440 Paris Cedex 09 (FR)**

(56) Documents cités:
WO-A-98/06024          FR-A- 2 646 612
US-A- 6 084 371          US-A- 6 161 126

• **SATO M ET AL: "A REMOTE COLLABORATION
SYSTEM USING HAND-FORCE VIRTUAL
ENVIRONMENT" ELECTRONICS &
COMMUNICATIONS IN JAPAN, PART III -
FUNDAMENTAL ELECTRONIC SCIENCE,
SCRIPTA TECHNICA. NEW YORK, US, vol. 80, no.
4, 1 avril 1997 (1997-04-01), pages 51-58,
XP000723464 ISSN: 1042-0967**

## Description

La présente invention relève du domaine de la transmission de retour d'effort à distance, notamment dans le cadre du développement de mondes virtuels répartis et du développement de moyens de téléprésence.

De la même façon que les techniques de codage de vidéo numérique s'appuient sur les connaissances de la perception visuelle, et les techniques de reconnaissance vocale sur les connaissances de l'ouïe, les techniques haptiques (du grec haptos : la main) s'appuient sur les connaissances des gestes.

Il existe deux sortes de gestes fins réalisables avec la main : les gestes balistiques, comme déplacer la main vers un verre pour le saisir et les gestes avec contre-réactions du toucher, comme celui qui permet après saisie du verre et fermeture de la pince pouce-doigts, de porter le verre à sa bouche. Le cerveau est alors informé en permanence de la force avec laquelle la main enserre le verre, de son poids qui dépend de la quantité de liquide. Le cerveau réagit alors en donnant l'ordre moteur de "pincer" suffisamment ce verre pour qu'il ne tombe pas, mais pas trop toutefois, pour ne pas le casser, ni dépenser une énergie inutile.

Les gestes balistiques activent l'arc moteur mais ils n'activent pas l'arc sensitif en retour du toucher. Le retour d'informations peut être une représentation visuelle de l'espace, mais aussi une carte gestuelle, c'est-à-dire une représentation mentale apprise ou innée câblée dans le cerveau et qui génère automatiquement la séquence des ordres moteurs des muscles de l'épaule, du bras, de la main pour réaliser ce geste balistique en fonction d'une certaine représentation mentale de l'espace, notamment de la distance présumée main-verre.

Pour les gestes balistiques, il est suffisant de transmettre au cerveau les informations sur le geste avec une fréquence d'échantillonnage de 100 Hz. Cela signifie que si on envoie un échantillon du signal toutes les 10 ms, le signal transmis contiendra toute l'information pertinente du geste balistique.

Les gestes avec contre-réactions du toucher activent en même temps l'arc moteur et l'arc sensitif. Le cerveau ferme la boucle et le cycle complet chez l'homme dure moins de 1 ms. La bande passante des neurones sensitifs situés dans les bouts des doigts, c'est-à-dire la fréquence maximale du signal mécanique que ces neurones sont capables de détecter et de transmettre au cerveau, est supérieure à 500 Hz. Si on veut pouvoir coder dans un ordinateur un geste fin, il faut que le système à retour d'efforts utilisé ait lui-même une fréquence de fonctionnement élevée, au moins égale, d'après le théorème de Shannon, au double de la bande passante des doigts.

Dans la pratique, les systèmes à retour d'efforts sur une machine locale fonctionnent à une fréquence typique dé 1 kHz en boucle fermée locale, c'est-à-dire qu'une rétroaction est calculée puis exercée sur leurs moteurs puis perçue par la main toutes les 1/1000 de seconde. Cela permet d'éviter l'effet dit de la "brosse à dents électrique" : l'instrument que l'on tient en main ne doit pas donner l'impression de vibrer.

Cette fréquence de 1 kHz résulte du compromis suivant : elle ne doit être ni trop basse pour pouvoir restituer finement l'impression tactile, ni trop haute pour laisser suffisamment de temps à l'ordinateur pour calculer la force de contre-réaction qui va représenter, dans le monde virtuel mécanique, la simulation fine du geste effectué.

Si maintenant on désire transmettre via un réseau de télécommunications, des gestes fins codés par le système à retour d'efforts et des gestes fins avec contre-réactions, le problème se complique du fait de la latence généralement bien supérieure introduite par le réseau lui-même.

Ainsi, la latence en technologie RNIS est de 30 ms, en technologie ADSL de l'ordre de 200 ms, et sur Internet elle peut atteindre 6 s ou même provoquer le rejet pur et simple du message. Sur ADSL et Internet, la latence varie du fait de la nature asynchrone des réseaux. La cadence de 1 kHz est donc beaucoup trop élevée pour pouvoir être maintenue si la boucle fermée inclut un aller-retour via le réseau - le geste est codé puis transmis via le réseau, il est appliqué à un objet distant, la contre-réaction de cet objet est à son tour codée et transmise en retour via le réseau -.

Un geste balistique peut être transmis avec un retard de l'ordre de grandeur de 10 ms. En effet, la vue est un sens monodirectionnel : l'oeil est une sorte de caméra enregistrant une scène et le cerveau, à une tolérance près, peut percevoir avec un léger retard le film visuel précis sans perturber l'exécution du geste.

Au contraire, un geste fin avec contre-réaction nécessite de boucler en moins d'une milliseconde, l'aller-retour de décision de l'intensité de la force à exercer :

- émission de l'ordre au muscle via l'arc sensitif moteur,
- action mécanique de la main sur le verre,
- sensation du toucher du verre (augmentation de la pression de contact) au niveau des bouts des doigts, et
- retour vers le cerveau via l'arc sensitif tactile de cette information pour permettre au cerveau de décider l'ajustement de la force de la "pince".

Elle est donc inapplicable sur les réseaux asynchrones à messages du type Internet ou ATM, UMTS, qui se caractérisent par un délai de transmission variable, et un rejet si le message se perd ou met trop de temps à traverser le réseau.

Le problème de la cadence trop élevée des systèmes à retours d'efforts est exacerbé sur ces réseaux asynchrones, pour lesquels :

- les messages peuvent se perdre, ne pas aboutir, ou être rejetés si l'accusé de réception tarde trop (TCP/IP),
- les messages qui arrivent à bon port mettent un délai variable pour traverser le réseau,
- ils n'arrivent pas forcément dans l'ordre où ils ont été émis,
- il n'existe pas d'horloge commune exacte à la milliseconde près entre deux machines.

L'invention propose de remédier aux inconvénients des systèmes de l'art antérieur.

L'invention propose un système de commande d'un élément à rétroaction situé à distance susceptible de fonctionner avec transmission de données sur réseaux tant synchrones ou qu'asynchrones, de retard connu ou indéterminé.

Le système de commande dynamique, selon un aspect de l'invention, est destiné à un élément à retour d'effort apte à interagir avec un autre élément, du type à constante de temps inférieure à celle liée à une commande à distance. Le système comprend un modèle local pour le calcul d'une consigne destinée à l'élément à retour d'effort à partir d'une variable mesurée par l'élément à retour d'effort, de variables intrinsèques à l'élément à retour d'effort, d'une variable de raideur, d'une variable de viscosité et d'une estimation d'une interaction extérieure sur l'élément à retour d'effort, et d'une variable d'état de l'élément à retour d'effort, un modèle distant pour l'estimation des interactions, d'une variable de raideur, d'une variable de viscosité et des variables d'état de l'autre élément avec mise à jour lors de la réception de données reçues d'un autre système situé à distance, ét un moyen de recalage apte à émettre un message de recalage vers ledit autre système.

On effectue ainsi une simulation locale du comportement de l'élément distant.

Avantageusement, le système comprend un modèle fantôme pour effectuer une estimation des variables d'état de l'élément à retour d'effort et recaler ladite estimation à réception du message de recalage. Le modèle fantôme permet de simuler localement le modèle distant du système de commande distant.

Dans un mode de réalisation de l'invention, le moyen de recalage comprend un moyen de comparaison de l'estimation des variables d'état provenant du modèle fantôme et de variables d'état provenant du modèle local de façon qu'en cas de différence supérieure à un seuil prédéterminé, le moyen de recalage émette un message de recalage vers le modèle fantôme et vers l'autre système.

Dans un mode de réalisation de l'invention, le système comprend un moyen d'extrapolation pour traiter un message de recalage provenant de l'autre système et pour mettre à jour le modèle distant.

L'invention propose également un ensemble de commande dynamique de deux éléments à retour d'effort situés à distance l'un de l'autre. Chaque élément est pourvu d'un système de corrimande comprenant un modèle local pour le calcul d'une consigne destinée à l'élément à retour d'effort à partir d'une variable mesurée par l'élément à retour d'effort, de variables intrinsèques à l'élément à retour d'effort, d'une variable de raideur, d'une variable de viscosité et d'une estimation d'une interaction extérieure sur l'élément à retour d'effort, et d'une variable d'état de l'élément à retour d'effort, un modèle distant pour l'estimation des interactions, d'une variable de raideur, d'une variable de viscosité et des variables d'état de l'autre élément avec mise à jour lors de la réception de données reçues d'un autre système situé à distance, et un moyen de recalage apte à émettre un message de recalage vers ledit autre système.

L'invention propose également un procédé de commande dynamique d'un élément à retour d'effort apte à interagir avec un autre élément, dans lequel on effectue une modélisation locale pour obtenir une consigne destinée à l'élément à retour d'effort à partir d'une variable mesurée par ledit élément à retour d'effort, de variables intrinsèques audit élément à retour d'effort, d'une estimation d'une interaction extérieure sur l'élément à retour d'effort, d'une variable de raideur, d'une variable de viscosité, et d'une variable d'état de l'élément à retour d'effort; on effectue une modélisation distante des interactions, d'une variable de raideur, d'une variable de viscosité et des variables d'état de l'autre élément avec mise à jour lors de la réception de données reçues d'un autre système situé à distance; on élabore et on émet vers ledit autre système un message de recalage.

Avantageusement, on effectue une modélisation fantôme des variables d'état de l'élément à retour d'effort avec recalage à réception du message de recalage.

Dans un mode de réalisation de l'invention, lors du recalage, on compare l'estimation de variables d'état issues de la modélisation fantôme et de variables d'état issues de la modélisation locale de façon qu'en cas de différence supérieure à un seuil prédéterminé, on émette un message de recalage en vue d'une nouvelle modélisation fantôme, et vers l'autre système.

Dans un mode de réalisation de l'invention, on effectue une extrapolation pour traiter un message de recalage provenant de l'autre système et effectuer une mise à jour de la modélisation distante.

Dans un mode de réalisation de l'invention, la variable de raideur est relative à la raideur selon un axe Z normal à une surface élémentaire reconstruite appartenant à une modélisation de la surface. La surface réelle sera la surface d'un objet en contact avec l'élément à retour d'effort. Le système distant comprend une modélisation distante de la surface. La variable de raideur est calculée par le modèle local à partir de données de position et de force fournies par des capteurs adéquats de l'élément à retour d'effort, puis envoyée au système distant. De même, la variable de viscosité sera relative à la viscosité selon l'axe Z et sera calculée par le modèle local à partir de données de position et de force fournies par lesdits capteurs, puis envoyée au système distant.

Dans un mode de réalisation de l'invention, on calcule une variable représentative de la viscosité tangentielle de l'élément à retour d'effort par rapport à l'autre élément. On peut ainsi affiner considérablement la précision et la justesse du retour d'effort.

L'invention concerne également un programme d'ordinateur comprenant des moyens de code programme pour mettre en oeuvre les étapes du procédé, lorsque ledit programme fonctionne sur un ordinateur.

L'invention concerne également un support capable d'être lu par un dispositif de lecture de moyens de code programme qui s'y trouvent stockés et qui sont aptes à la mise en oeuvre des étapes du procédé, lorsque ledit programme fonctionne sur un ordinateur.

La présente invention s'applique de façon avantageuse à des systèmes bidirectionnels, par exemple des jeux vidéo avec poignées de commande pourvues d'actionneurs pour le retour d'effort, à la télé-échographie robotisée qui peut être utilisée dans le domaine de l'obstétrique et des examens abdominaux.

Dans le cas de l'échographie, la peau du patient ou de la patiente est généralement enduite d'un gel pour une transmission convenable des ultra sons. La sonde échographique pourra être manipulée à distance par un opérateur. En raison de la présence du gel, les composantes de force exercée par le patient ou la patiente sur la sonde peuvent être considérées comme normales à la surface locale de la peau. La sonde possède 6 degrés de liberté avec une contre réaction de force selon les trois axes d'un repère tridimentionnel et une contre réaction de couple également selon les trois axes d'un repère tridimensionnel. Le système peut également s'appliquer à des jeux de combat à distance, d'escrime, ou encore à des applications industrielles du genre télé-usinage.

La présente invention sera mieux comprise et d'autres avantages apparaîtront à la lecture de la description détaillée de quelques modes de réalisation pris à titre d'exemple nullement limitatifs et illustrés par les dessins annexés, sur lesquels:

les figures 1 et 4 sont des vues schématiques de systèmes selon deux modes de réalisation de l'invention;
la figure 2 est une vue détaillée d'une variante de la figure 1;
la figure 3 sont des courbes de certains paramètres du système;
la figure 5 est une vue schématique de la reconstruction en un point; et
la figure 6 est un organigramme des étapes du procédé.

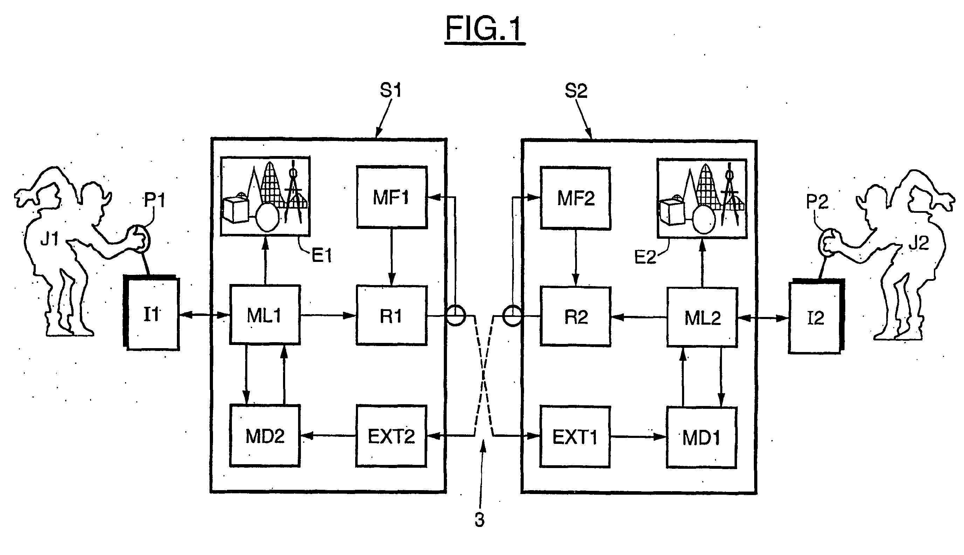

Comme on peut le voir sur la figure 1, un ensemble de jeux où des joueurs J1 et J2 comparent leur force à distance - jeu souvent appelé "bras de fer" - comprend une poignée P1 pour le joueur J1 et une poignée P2 pour le joueur J2. Chaque poignée P1, P2 est reliée à une interface I1, I2 comprenant un moyen pour exercer une force sur la poignée P1, P2, par exemple un actionneur du genre vérin électrique, et un moyen pour mesurer la force exercée par le joueur J1, J2 sur la poignée P1, P2, par exemple un capteur de couple ou encore une jauge de contrainte, et au moins un capteur de position, de type angulaire ou linéaire, de préférence bon marché car sa précision peut être faible. L'interface I1, I2 comprendra également une carte d'acquisition reliée au moyen d'exercice d'une force, au moyen de mesure de force et au capteur de position, et capable d'échanger des données numériques avec un autre système numérique tel qu'un ordinateur. Les données numériques envoyées par l'interface I1, I2 comprennent un vecteur force ou couple et un vecteur position ou déplacement. Dans le cas de capteurs de position angulaire, les données numériques envoyées par l'interface I1, I2 comprennent des angles $\alpha, \beta, \gamma$.

Chaque interface I1, I2 est reliée à un système de commande S1, S2. Dans le cas illustré ici, les systèmes S1 et S2 sont identiques. Seul le système S1 sera décrit. Toutefois, on peut envisager des modes de réalisation dans lesquels l'un des deux systèmes est de structure simplifiée par rapport à l'autre.

De façon générale, le système S1 peut se présenter sous la forme d'un ordinateur, du genre ordinateur personnel généralement pourvu d'au moins un micro-processeur, de mémoires rémanente et non rémanente, d'un bus de communication, de ports d'entrée et de sortie et d'un ou plusieurs logiciels stockés en mémoire et aptes à être exécutés par le micro-processeur.

Le système S1 est relié d'une part à l'interface I1 par exemple par un bus de type RS 232 et au système S2 par un réseau de communication référencé 3 dans son ensemble et qui pourra être de type synchrone par exemple RNIS ou asynchrone, de type ATM, UMTS ou encore Internet (TCP/IP). Le système S1 est situé à proximité du joueur J1, par exemple dans la même pièce. Le système S2 est situé à distance du système S1, distance qui peut aller de quelques mètres à quelques milliers de kilomètres. En d'autres termes, le système S1, l'interface I1, la poignée P1 et le joueur J1 sont disposés de façon locale tandis que le système S2, l'interface I2, la poignée P2 et le joueur J2 sont disposés de façon distale par rapport aux précédents.

Plus précisément, le système S1 comprend un modèle local ML1 apte à envoyer une consigne à l'interface I1 et à recevoir de ladite interface I1 une variable mesurée par l'interface I1, par exemple la position X de la poignée P1 et le force subie. La consigne peut être une variable de force ou de couple et est notée $F_e$. Le modèle local ML1 calcule une variable de raideur $k = G_{y3}/y3$ avec $G_{y3}$ la force exercée sur poignée P1 selon un axe Y3 et y3 la position de la poignée P1 selon l'axe Y3 et une variable de viscosité $\lambda = G_{y3}/V_{Y3}$ avec $G_{y3}$ la force exercée sur poignée P1 selon un axe Y3 et $V_{y3}$ la vitesse de la poignée P1 selon l'axe Y3, obtenue par dérivation de y3. L'axe Y3 peut être pris comme étant la direction principale de la force $G = (G_{y1}, G_{y2}, G_{y3})$.

Le système S1 comprend un modèle distant MD2 prévu pour estimer un état du modèle local ML2 du système S2. Le modèle distant MD2 du système S1 est apte à recevoir des données en provenance du système S2, à recevoir des données en provenance du modèle local ML1 et à émettre des données vers le modèle local ML1. Plus particulièrement, le système S1 comprend un extrapolateur EXT2 recevant des données en provenance du système S2 par l'intermédiaire du réseau de communication 3 pour traiter un message de recalage provenant du système S2 et transmettre des données de mise à jour au modèle distant MD2 en fonction du message de recalage reçu en dernier.

Le système S 1 comprend un écran E1 relié au modèle local ML1 pour l'affichage de données issues du modèle local ML1, par exemple une courbe retraçant l'évolution des forces exercées et des positions des poignées P1 et P2.

Le système S1 comprend un recaleur R1 recevant des données du modèle local ML1 et apte à envoyer des données de sortie à destination du système S2, en particulier à destination de l'extrapolateur EXT1 du système S2. Le recaleur R1 est apte à effectuer une préparation de données pour les émettre sous la forme d'un message de recalage qui pourra comprendre une date, la position X de la poignée P1, la force F exercée sur la poignée P1 à ladite date ainsi que la force exercé sur la poignée P1 à une date antérieure.

Le système S1 comprend, en outre, un modèle fantôme MF1 qui reçoit également les messages de recalage en provenance du recaleur R1 du système S1 et qui effectué une estimation des variables d'état de l'interface I1 d'après les messages de recalage émis par le recaleur R1 et reçu par le système S2. En d'autres termes, le modèle fantôme MF1 effectue une estimation d'après les mêmes données que celles reçues par le modèle distant MD1 du système S2. Ainsi, le modèle fantôme MF1 permet de modéliser les variables de l'interface I1 telles qu'elles sont modélisées par le système S2.

La sortie du modèle fantôme MF1 est reliée au recaleur R1 qui compare l'estimation des variables d'état provenant du modèle fantôme MF1 et les variables d'état provenant du modèle local ML1. En cas de différence supérieure à un seuil prédéterminé, le recaleur R1 émet un message de recalage destiné au modèle fantôme MF1 et à l'extrapolateur EXT1 du système S2. Ainsi, le volume de données échangé entre les systèmes S1 et S2 est relativement réduit dans la mesure où un message de recalage n'est émis que si l'un des deux systèmes S1, S2 estime que l'autre système S2, S1 n'est plus en mesure d'estimer convenablement ces variables d'état.

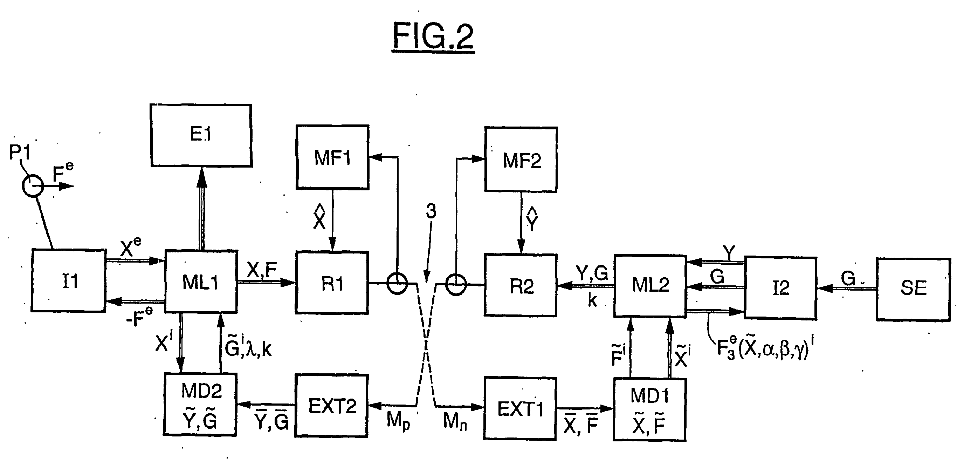

La figure 2 illustre un autre mode de réalisation de l'invention, dans le domaine de l'échographie. Pour l'opérateur J1, le vecteur d'état X se décompose en trois parties : $X^e$ variable située à l'interface avec la poignée P1, $X^m$ variable interne au modèle mécanique de l'opérateur J1 et $X^i$ variable d'interaction située à l'interface avec le patient J2. De façon analogue, la variable associée de force ou de couple F se décompose en : $F^e$ force exercée par l'opérateur J1 sur la poignée P1, $F^m$ force exercée par la pesanteur, les autres objets, et la force $F^i$ exercée par l'opérateur J1 sur le patient J2. De manière analogue, le vecteur d'état Y du patient J2 se décompose en $Y'^e$, $Y'^m$ et $Y'^i$ et le vecteur associé de force de couple G se décompose en $G'^e$, $G'^m$, et $G'^i$. L'opérateur J1 et le patient J2 sont en contact virtuel. On a donc $X^i = Y^i$. La loi de l'action et de la réaction donne : $F^i + G'^i = 0$.

A chaque pas de temps, l'interface I1 capte la position $X^e_n$ et la transmet au modèle local ML1. L'interface I1 reçoit la force de consigne $F^e_n$ en provenance du modèle local ML1 et commande son ou ses actionneurs avec la force de contre-réaction $- F^e_n$. De façon analogue, l'interface I2 capte la position $Y'^e_n$ et la force $G_{mesurée}$ et les transmet au modèle local ML2 et reçoit la force $G'^e_n$ du modèle local ML2 et commande son ou ses actionneurs avec le force de contre-réaction $- G'^e_n$.

Au début de l'instant n + 1, le modèle local ML1 reçoit la position $X^e_{n+1}$ de l'interface I1, l'estimation d'interaction $\tilde{G}^i_{n+1}$ du modèle distant MD2, les variables de raideur k et de viscosité $\lambda$ en provenance du modèle distant MD2, et les variables intrinsèques préenregistrées $F^m_{n+1}$. Le modèle local ML1 calcule la force exercée par le joueur J1 sur le joueur J2 : $F^i_{n+1} = \tilde{G}^i_{n+1}$, la force exercée par le joueur J1 sur la poignée P1 :

$$F^e_{n+1} = B^{ee-1} \{ X^e_{n+1} - X^e_n - A^e X_n - B^{em} F^m_{n+1} + B^{ei} \tilde{G}^i_{n+1} \},$$ les matrices A et B étant celles de l'évolution du joueur J1 avec $X = AX + BF$. Le modèle local ML1 calcule encore :

$$X^{m,i}{}_{n+1} = X^{m,i}{}_n + A^{m,i}X_n + B^{m,i}\begin{bmatrix} F^e{}_{n+1} \\ F^m{}_{n+1} \\ -\tilde{G}_{n+1} \end{bmatrix}$$

Le moèle local ML1 envoie $X_{n+1}$ et $F_{n+1}$ au recaleur R1, la consigne - $F^e{}_{n+1}$ à l'interface I1 et la variable de position $X^i{}_{n+1}$ au modèle distant MD2.

Le modèle fantôme MF1 s'il ne reçoit pas de message du recaleur R1 calcule $\hat{F}_{n+1} = \hat{F}_n + K_1$, $K_1$ étant fourni par le système S2, et l'estimation de position $\hat{X}_{n+1} = (I+A)\hat{X}_n + B\hat{F}_{n+1}$, c'est-à-dire l'état mécanique du joueur J1 tel qu'il peut être prédit par le système S2. I est ici la matrice identité.

Sur réception d'un message de recalage $M_n = \{n, \bar{X}_n, \bar{F}_n \text{ et } \bar{F}_{n-1}\}$ en provenance du recaleur R1, le modèle fantôme MF1 effectue le recalage suivant : $\hat{X}_n = \bar{X}_n, \hat{F}_n = \bar{F}_n$ et $K1 = \bar{F}_n - \bar{F}_{n-1}$

Le recaleur R1 reçoit à chaque pas de temps n la variable de position $X_n$ et les variables d'effort $F_n$ et $F_{n+1}$ en provenance du modèle local ML1, et l'estimation $\hat{X}_n$ en provenance du modèle fantôme MF1. Il compare la valeur absolue de la différence entre la variable de position $X_n$ et l'estimation $\hat{X}_n$ à un seuil prédéterminé et ne fait rien si ladite valeur absolue est inférieure audit seuil. Dans le cas contraire, il compose un message de recalage $M_n = \{n, X_n, F_n, F_{n-1}\}$. Le recaleur R1 envoie le message de recalage $M_n$ au modèle fantôme MF1 pour qu'il se recale immédiatement et au modèle distant MD1 par l'intermédiaire de l'extrapolateur EXT1 du système S2 pour qu'il se recale le plus tôt possible.

L'extrapolateur EXT2 du système S1 permet de réaliser une synchronisation. En effet, le message $M_p = \{p, Y_p, G_p, G_{p-1}\}$ émis par le recaleur R2 du système S2 arrive au système S1 à un instant compris entre n et n+ 1. Toutefois, le message $M_p$ est estampillé par la date p en provenance du système S2. L'extrapolateur EXT2 calcule $K_2 = G_p - G_{p-1}$ et recale le modèle distant MD2 en effectuant : $\bar{G}_p = G_p$ et $\bar{Y}_p = Y_p$ puis aux instants suivants et quel que soit : j = p,..., n, $\bar{G}_{j+1} = \bar{G}_j + K2$ et $\bar{Y}_{j+1} = \bar{Y}_j + C\bar{Y}_j + D\bar{G}_{j+1}$, C et D étant les matrices équivalentes aux matrices A et B pour le joueur J2. L'extrapolateur EXT2 transmet au modèle distant MD2 le résultat du recalage : $\bar{Y}_{n+1}, \bar{G}_{n+1}$ et $K_2$.

Le modèle distant MD2 du système S1 se recale sur réception d'un message en provenance de l'extrapolateur EXT2 en prenant les valeurs fournies par ledit extrapolateur EXT2 :

$$\tilde{G}_{n+1} = \overline{G}_{n+1}, \qquad \tilde{Y}_{n+1} = \overline{Y}_{n+1} \qquad \tilde{K}_2 = K_2$$

Hors réception d'un tel message, et à chaque pas de temps, le modèle distant MD2 reçoit la variable de position $X^i{}_{n+1}$ en provenance du modèle local ML1 et effectue un calcul prédictif :

$$\tilde{G}^{e,m}{}_{n+1} = \tilde{G}^{e,m}{}_n \tilde{K}^{e,m}2$$

$$\tilde{G}^i{}_{n+1} = D^{ii-1}\left\{ X^i{}_{n+1} - \tilde{Y}^i{}_n - C\tilde{Y}^i{}_n - D^e G^e{}_{n+1} - D^m G^m{}_{n+1} \right\}$$

$$\tilde{Y}^{e,m}{}_{n+1} = \tilde{Y}^{e,m}{}_n + C^{e,m}\tilde{Y}_n + D^{e,m}\tilde{G}_{n+1}$$

$$\tilde{Y}^i{}_{n+1} = X^i{}_{n+1}$$

Le modèle distant MD2 transmet au modèle local ML1 la variable de raideur k, la variable de viscosité λ, et la prédiction de variable de position relative au joueur J2 : $\hat{G}_{n+1}$

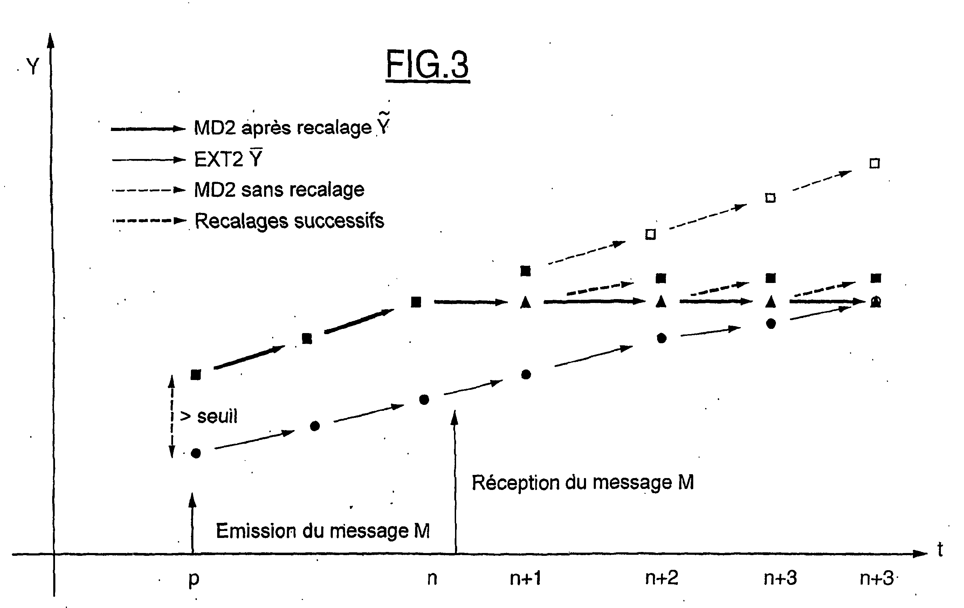

De préférence, l'extrapolateur EXT2 effectue un recalage en biseau qui permet de lisser les évolutions. Un exemple de ce recalage est montré sur les courbes de la figure 3. Au lieu de ramener brutalement l'estimation de la variable de position Y à la variable $\bar{Y}$ calculée comme exposée ci-dessus par l'extrapolateur EXT2, le recalage est effectué en quatre étapes entre les instants n et n+4 selon le calcul suivant :

$$k = \mid \tilde{Y}_{n+1} - \overline{Y}_{n+1} \mid /\text{seuil} + 1 \;;$$

Si k = 1, alors $\tilde{Y}_{n+1} := \overline{Y}_{n+1}$
Sinon j = n,

$$\overline{G}_{j+1} = \overline{G}_j + K2$$

$$\overline{Y}_{j+1} = \overline{Y}_j + C\overline{Y}_j + D\overline{G}_{j+1}$$

$$\tilde{Y}_{j+1} := \tilde{Y}_j + C\tilde{Y}_j + D\overline{G}_{j+1}$$

$$\tilde{Y}_{j+1} = \left(\overline{Y}_{j+1} + (K-1)\tilde{Y}_{j+1}\right)/k$$

$$j := j+1$$

Si k est supérieur à 2, alors k : = k-1

Sinon on sort de la boucle et $\tilde{Y}_{j+1} = \overline{Y}_{j+1}$. Le recalage en biseau permet un fonctionnement plus doux du système, ce qui est mieux perçu par les utilisateurs et implique moins de contraintes mécaniques.

Le modèle local ML2 reçoit du modèle distant MD1 l'estimation de position~$X^i$ et envoie au recaleur R2 la position $Y_{n+1}$, la force $G_{n+1}$ et la variable de raideur k. Le modèle local ML2 envoie également la consigne - $F^e_{n+1}(\sim X^i, Y)$ à l'interface I2.

Le modèle local ML1 établit un modèle mécanique de la sonde virtuelle en se basant sur la relation suivante: f = mγ -λv-kx, avec m la masse de la sonde virtuelle, k le coefficient d'élasticité de la peau du mannequin virtuel et λ le coefficient de freinage visqueux qui traduit la vitesse limitée du robot compliant distant. Le déplacement le long de l'axe de la sonde vérifie: $dx_3/dt = dy_3/dt$.

Les coefficients k et λ sont ajustés dynamiquement et en temps réel. La viscosité est supérieure à zéro à vitesse nulle et monotone croissante avec la vitesse du robot virtuel, par exemple selon une courbe quadratique ou approchée.La viscosité le long de l'axe de la sonde prend en compte les caractéristiques dynamiques de la peau et celles du robot compliant: $\lambda^i_3 = (G^i + m\gamma^i_3 - k^i x^i_3)/(dx^i_3/dt)$. On pourra aussi tenir compte des trois degrés de liberté angulaire de la sonde, le modèle local ML2 envoyant à l'interface I2 les angles correspondants α, β, γ. L'interface I2 exécute alors les déplacements nécessaires pour que $y_1 = x_1$ et $y_2 = x_2$. Pour que les forces G et F soient égales, on fait varier $y_3$ de façon que si F>G alors $y_3$ décroît et si F<G alors $y_3$ croît.

A la convergence, on a k = $G/\Delta y_3$ = $F/\Delta y_3$. On peut ainsi palper un objet distant dont les caractéristiques mécaniques évoluent en fonction du temps. Un opérateur peut sentir l'objet distant dont le modèle mécanique est recalculé en temps réel. Un télécalibrage dynamique peut être effectué automatiquement à la suite d'un télécalibrage statique lors d'une mise en service du système pour un objet donné.

De façon plus générale, le modèle fantôme MF1 reçoit les mêmes données que le modèle distant MD1 de l'autre système et permet d'effectuer la même simulation que ledit autre système. En d'autres termes, on cherche à savoir ce que l'autre système ne sait pas dans un but de recalage. Le recaleur fonctionne en aveugle par rapport à l'autre système et permet de continuer à simuler en l'absence de données pertinentes transmises par un message de recalage en provenance de l'autre système. L'extrapolateur EXT2, en particulier dans le cas du recalage en biseau, permet de tenir compte du mouvement tel que mesuré par l'autre système pendant le délai de transmission dû au réseau de communication. Dans une variante simplifiée, on peut parfaitement concevoir que l'un des deux ou les deux systèmes est dépourvu de modèle fantôme. On peut également prévoir de faire fonctionner ensemble un nombre de systèmes supérieur à deux.

Les modèles locaux représentent les modèles mécaniques des deux utilisateurs. Les modèles distants représentent une réplication distante des modèles mécaniques locaux nécessairement approchée du fait des délais de transmission via le réseau de communication des états des modèles locaux. Les modèles fantômes représentent une copie locale approchée des modèles distants. Les modèles distants et les modèles fantômes fonctionnent tous en mode prédicteur-correcteur. Les extrapolateurs effectuent une extrapolation des messages reçus avec un certain retard pour recaler les modèles distants à la valeur de l'horloge de l'autre système. Les recaleurs évaluent la nécessité de lancer un message de recalage sur le réseau de communication dès qu'un écart trop grand apparaît entre les modèles locaux et les modèles fantômes témoins prédictifs locaux des modèles prédictifs distants. Les recaleurs permettent de limiter le nombre de messages émis à travers le réseau de communication pour éviter de l'encombrer. A l'intérieur d'un système, les échanges d'information peuvent être effectués à la cadence d'un khz. Entre les systèmes et donc par l'intermédiaire du réseau de communication, les échanges de message s'effectuent si l'un des recaleurs le considère comme nécessaire.

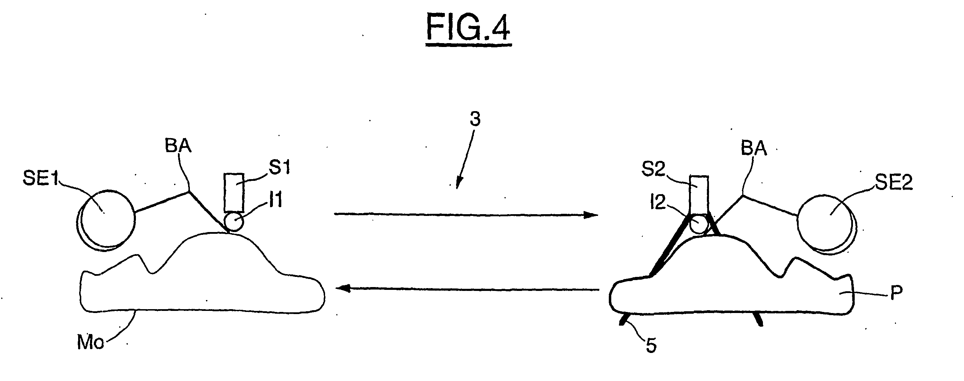

Sur la figure 4, est représenté un autre mode de réalisation particulièrement adapté à l'échographie. A proximité de la patiente P est disposée la sonde échographique SE2 supportée par le bras BA relié à l'interface I2, lui-même relié au système S2. Ces éléments sont supportés par un support 5. Dans un local situé à distance, sont disposés le système S1, l'interface I1 et un élément mobile SE1 de même forme extérieure, de même masse et de même inertie que la sonde SE2.

On a représenté en trait fin la modélisation distante Mo dans son état final, c'est-à-dire extrêmement proche de la forme de la patiente P. L'élément mobile SE1 est ici disposé dans un état de repos, dans une position relative à la modélisation distante Mo identique à la position de la sonde SE2 relativement à la patiente P et écarté de celle-là. L'élément mobile SE1 va être saisi par un praticien comme l'aurait été une véritable sonde échographique et va être descendu progressivement vers le bas. La sonde échographique SE2 suit le même déplacement que l'élément mobile SE1. Le praticien vient d'abord, en déplaçant l'élément mobile SE1, placer la sonde échographique SE2 sur la surface la plus haute de la patiente, en générale le sommet de son abdomen. La force de contre-réaction exercée par l'abdomen de la patiente P sur la sonde SE2 est recopiée à distance de façon que le praticien maniant l'élément mobile SE1 perçoive le même effet, en d'autres termes la même force de contre-réaction, que s'il maniait une sonde échographique réelle contre l'abdomen d'une patiente.

A partir du sommet de l'abdomen de la patiente P, le praticien maniant l'élément mobile SE1 en le déplaçant à la fois verticalement et horizontalement, va découvrir progressivement le contour de la patiente P, éventuellement en s'aidant d'un écran de visualisation tel que l'écran E1 illustré sur la figure 1. Le praticien en manipulant l'élément mobile SE1 va faire décrire l'abdomen de la patiente P à la sonde SE2 qui en réplique le mouvement. La force exercée par l'abdomen de la patiente sur la sonde SE2 est répliquée par l'élément mobile SE1.

Les positions de l'élément mobile SE1 et de la sonde SE2 étant sensiblement identiques, l'élément mobile SE1 est positionné de façon sensiblement identique à la position qu'aurait une sonde réelle parcourant l'abdomen de la même patiente. Le système S1 enregistre les différentes positions de l'élément mobile SE1, ce qui permet à partir d'un nombre de points de mesure suffisant, d'effectuer une reconstruction tridimensionnelle de la surface extérieure de l'abdomen de la patiente, et donc d'obtenir la modélisation distante Mo.

On pourra prévoir une plage de force de contre-réaction dans laquelle le système S1 considérera que l'élément mobile SE1 est dans une position correspondante à la surface de l'abdomen de la patiente. Au-dessus de la borne supérieure de la plage, on considérera que l'élément mobile SE1 est trop enfoncé dans l'abdomen. En dessous de la borne inférieure de la plage, on considérera qu'il n'y a pas contact et que l'élément mobile est situé hors de la surface extérieure de l'abdomen de la patiente P.

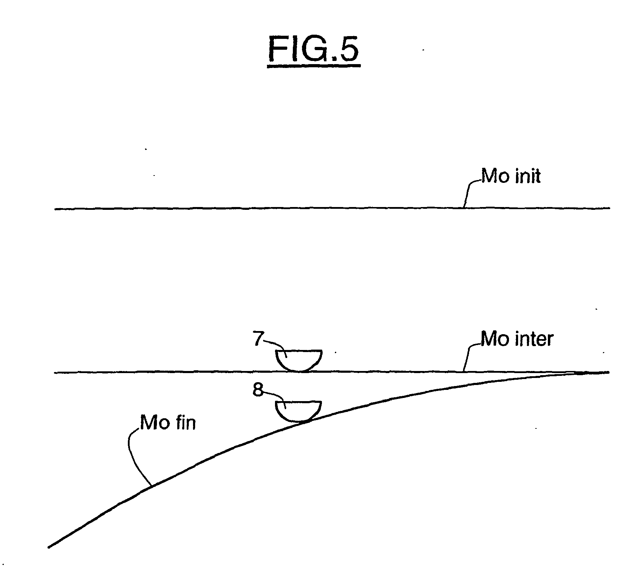

La figure 5 est un schéma illustrant les étapes de génération de la modélisation distante. Tout d'abord, la modélisation distante se présente sous la forme d'une modélisation initiale $Mo_{inter}$, qui est une surface plane maillée, vue ici en coupe. Puis, le praticien en manipulant l'élément mobile SE1 positionne la sonde échographique SE2 sur le sommet de l'abdomen de la patiente P. La modélisation initiale $Mo_{init}$ devient alors une modélisation intermédiaire $Mo_{inter}$, toujours sous la forme d'une surface plane, mais tangente au sommet de l'abdomen de la patiente. En d'autres termes, les coordonnées verticales des points de la modélisation ont été diminuées de la distance séparant la.modélisation initiale $Mo_{init}$ du sommet de l'abdomen de la patiente, les modélisations initiale $Mo_{init}$ et intermédiaire $Mo_{inter}$ étant des plans horizontaux.

Le praticien décale alors la sonde SE1 horizontalement et l'amène, par exemple dans la position 7 affleurant la modélisation intermédiaire $Mo_{inter}$, puis amène l'élément mobile dans la position 8, de sorte que la sonde échographique SE2 est en contact avec l'abdomen de la patiente P. Dès que la force de contre-réaction exercée par l'abdomen de la patiente P sur la sonde SE2 dépasse la borne inférieure de la plage et est transmise au système S1, ledit système S1 enregistre la position comme appartenant à la surface supérieure de l'abdomen de la patiente P. En pratique, le praticien pourra effectuer des mouvements courbes de façon que la sonde SE2 suive la surface supérieure de l'abdomen de la patiente P, et ce à la fois pour le confort de la patiente et la rapidité du procédé. En outre, lors de tout déplacement de l'élément mobile SE1 au-delà de la modélisation, on peut prévoir qu'une légère force de contre-réaction soit exercée par l'élément mobile SE1 sur les mains du praticien de façon que ledit franchissement lui soit perceptible. Ladite force sera commandée par le système S1 et appliquée par l'interface I1, et pourra être réglable tout en restant inférieure à la borne inférieure de ladite plage. Ladite force pourra comprendre une partie constante analogue à un frottement sec et une partie variable proportionnelle à la vitesse du déplacement de l'élément mobile SE1.

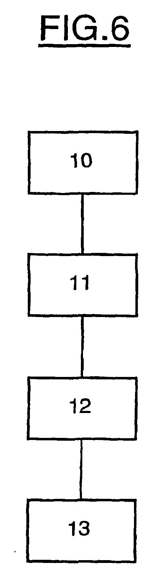

Sur la figure 6, sont illustrées de façon schématique, les différentes étapes du procédé. A l'étape 10 d'initialisation, la sonde SE2 et l'élément mobile SE1 se placent dans une position d'attente ou de repos, permettant à la patiente P de s'installer sur une table d'examen ou de quitter une telle table. A l'étape 11, le praticien commande l'approche de la sonde SE2 vers le sommet de l'abdomen de la patiente P. A l'étape 12, a lieu le contact entre la sonde SE2 et le sommet de l'abdomen de la patiente, l'enregistrement par le système S1 des coordonnées du premier point de contact et le déplacement de la modélisation distante Mo de la modélisation distante initiale $Mo_{init}$ à la modélisation distante intermédiaire $Mo_{inter}$. A l'étape 13, le praticien fait parcourir à la sonde SE2 la surface supérieure de l'abdomen de la patiente. A chaque fois qu'un point de coordonnées déterminé est considéré comme appartenant à la surface supérieure de l'abdomen de la patiente P, la modélisation distante intermédiaire $Mo_{inter}$ est déformée maille par maille ou noeud par noeud pour épouser la forme de la surface supérieure de l'abdomen de la patiente P. On parvient ainsi progressivement à la modélisation distante finale $Mo_{fin}$.

La modélisation distante Mo peut comprendre une maille de taille variable ou fixe. On peut mettre en oeuvre éventuellement une resegmentation afin d'affiner la modélisation dans certaines zones.

A l'issue de cet étalonnage, le système S1 stocke dans une mémoire la modélisation distante finale, ce qui lui permet de réagir avec un temps de réponse extrêmement bref, même si le réseau de transmission 3 pâtit de délais de transmission élevés. Ultérieurement, lorsque le praticien déplacera l'élément mobile SE1 en traversant la modélisation distante finale, le système S1 appliquera une force à l'élément mobile SE1, simulant la force de contre-réaction de l'abdomen de la patiente P sur la sonde SE2. En y ajoutant éventuellement un terme de frottement afin d'éviter des mouvements trop rapides de l'élément mobile SE1 et donc de la sonde échographique SE2.

L'invention met donc en oeuvre une déformation d'un maillage géométrique sous le geste du praticien utilisateur. Le télé-étalonnage du mannequin virtuel ou modélisation distante, s'effectue par un balayage intuitif du praticien utilisateur afin de faire tendre le maillage de départ ou modélisation distante initiale vers la forme de la patiente dont la corpulence et notamment le stade de la grossesse sont extrêmement variables d'une personne à une autre. On peut ainsi palper une personne ou l'objet situé à distance d'un poste maître, ce qui permet d'approcher une forme tridimensionnelle et d'appréhender la forme de la personne ou de l'objet, la présence d'une caméra n'étant pas indispensable. Dans le cadre d'une application utilisant déjà un système à retour d'effort, la méthode proposée permet la reconstruction à distance de la forme tridimensionnelle sans recourir aux méthodes antérieures comme les relevés lasers ou la stéréophotographie.

**Revendications**

1. Système de commande dynamique (S1) d'un élément à retour d'effort (I1) apte à interagir avec un autre élément (I2), du type à constante de temps inférieure à celle liée à une commande à distance, **caractérisé par le fait qu'**il comprend un modèle local (ML1) pour le calcul d'une consigne ($F_e$) destinée à l'élément à retour d'effort à partir d'une variable ($X^e$) mesurée par l'élément à retour d'effort, de variables intrinsèques ($\tilde{F}^m$) à l'élément à retour d'effort, d'une variable de raideur (k), d'une variable de viscosité ($\lambda$) et d'une estimation ($\tilde{G}$) d'une interaction extérieure sur l'élément à retour d'effort, et d'une variable d'état ($X^{m,i}$) de l'élément à retour d'effort, un modèle distant (MD2) pour l'estimation des interactions, d'une variable de raideur, d'une variable de viscosité et des variables d'état de l'autre élément avec mise à jour lors de la réception de données reçues d'un autre système (S2) situé à distance, et un moyen de recalage (R1) apte à émettre un message de recalage ($M_n$) vers ledit autre système.

2. Système selon la revendication 1, **caractérisé par le fait qu'**il comprend un modèle fantôme (MF1) pour effectuer une estimation ($\hat{X}, \hat{F}$) des variables d'état de l'élément à retour d'effort et recaler ladite estimation à réception du message de recalage.

3. Système selon la revendication 2, **caractérisé par le fait que** le moyen de recalage (R1) comprend un moyen de comparaison de l'estimation des variables d'état provenant du modèle fantôme et de variables d'état provenant du modèle local de façon qu'en cas de différence supérieure à un seuil prédéterminé, le moyen de recalage émette un message de recalage vers le modèle fantôme (MF1) et vers l'autre système (S2).

4. Système selon l'une quelconque des revendications précédentes, **caractérisé par le fait qu'**il comprend un moyen d'extrapolation (EXT 2) pour traiter un message de recalage provenant de l'autre système et pour mettre à jour le modèle distant.

**5.** Ensemble de commande de deux éléments distants, chaque élément étant pourvu d'un système de commande selon l'une quelconque des revendications précédentes.

**6.** Procédé de commande dynamique d'un élément à retour d'effort apte à interagir avec un autre élément, dans lequel :

- on effectue une modélisation locale pour obtenir une consigne destinée à l'élément à retour d'effort à partir d'une variable mesurée par ledit élément à retour d'effort, de variables intrinsèques audit élément à retour d'effort, d'une estimation d'une interaction extérieure sur l'élément à retour d'effort, d'une variable de raideur, d'une variable de viscosité et d'une variable d'état de l'élément à retour d'effort;
- on effectue une modélisation distante des interactions, d'une variable de raideur, d'une variable de viscosité et des variables d'état de l'autre élément avec mise à jour lors de la réception de données reçues d'un autre système situé à distance;
- on élabore et on émet vers ledit autre système un message de recalage. -

**7.** Procédé selon la revendication 6, dans lequel on effectue une modélisation fantôme des variables d'état de l'élément à retour d'effort avec recalage à réception du message de recalage.

**8.** Procédé selon la revendication 7, dans lequel lors du recalage, on compare l'estimation de variables d'état issues de la modélisation fantôme et de variables d'état issues de la modélisation locale de façon qu'en cas de différence supérieure à un seuil prédéterminé, on émette un message de recalage en vue d'une nouvelle modélisation fantôme, et vers l'autre système.

**9.** Procédé selon l'une quelconque des revendications 6 à 8, dans lequel on effectue une extrapolation pour traiter un message de recalage provenant de l'autre système et effectuer une mise à jour de la modélisation distante.

**10.** Procédé selon l'une quelconque des revendications 6 à 9, dans lequel on calcule une variable représentative de la viscosité tangentielle de l'élément à retour d'effort par rapport à l'autre élément.

**11.** Programme d'ordinateur comprenant des moyens de code-programme pour mettre en oeuvre les étapes du procédé selon l'une quelconque des revendications 6 à 10, lorsque ledit programme fonctionne sur un ordinateur.

**12.** Support capable d'être lu par un dispositif de lecture de moyens de code-programme qui s'y trouvent stockés et qui sont aptes à la mise en oeuvre des étapes du procédé selon l'une quelconque des revendications 6 à 10, lorsque ledit programme fonctionne sur un ordinateur.

**Claims**

**1.** System (S1) for dynamically controlling a force feedback element (I1) able to interact with another element (I2), of the type with smaller time constant than that tied to a remote control, **characterized in that** it comprises a local model (ML1) for the calculation of a preset ($F_e$) intended for the force feedback element on the basis of a variable ($X^e$) measured by the force feedback element, of variables ($F^m$) intrinsic to the force feedback element, of a stiffness variable (k), of a viscosity variable ($\lambda$) and of an estimate ($\bar{G}$) of an exterior interaction on the force feedback element, and of a state variable ($X^{m,i}$) of the force feedback element, a remote model (MD2) for the estimation of the interactions, of a stiffness variable, of a viscosity variable and of state variables of the other element with updating upon the receipt of data received from another system (S2) situated remotely, and a reset means (R1) able to emit a reset message ($M_n$) to the said other system.

**2.** System according to Claim 1, **characterized in that** it comprises a phantom model (MF1) for making an estimate ($\hat{X}, \hat{F}$) of the state variables of the force feedback element and for resetting the said estimate on receipt of the reset message.

**3.** System according to Claim 2, **characterized in that** the reset means (R1) comprises a means of comparison of the estimate of the state variables originating from the phantom model and of state variables originating from the local model in such a way that in the event of a difference greater than a predetermined threshold, the reset means emits a reset message to the phantom model (MF1) and to the other system (S2).

**4.** System according to any one of the preceding claims, **characterized in that** it comprises a means of extrapolation (EXT2) for processing a reset message originating from the other system and for updating the remote model.

5. Assembly for controlling two remote elements, each element being provided with a control system according to any one of the preceding claims.

6. Method of dynamically controlling a force feedback element able to interact with another element, in which:

- a local modelling is performed so as to obtain a preset intended for the force feedback element on the basis of a variable measured by the said force feedback element, of variables intrinsic to the said force feedback element, of an estimate of an exterior interaction on the force feedback element, of a stiffness variable, of a viscosity variable and of a state variable of the force feedback element;
- a remote modelling is performed of the interactions, of a stiffness variable, of a viscosity variable and of state variables of the other element with updating upon the receipt of data received from another system situated remotely;
- a reset message is formulated and emitted to the said other system.

7. Method according to Claim 6, in which a phantom modelling of the state variables of the force feedback element with resetting on receipt of the reset message is performed.

8. Method according to Claim 7, in which during the reset, the estimate of state variables arising from the phantom modelling and of state variables arising from the local modelling are compared in such a way that in the event of a difference greater than a predetermined threshold, a reset message is emitted with a view to a new phantom modelling, and to the other system.

9. Method according to any one of Claims 6 to 8, in which an extrapolation is performed so as to process a reset message originating from the other system and to perform an update of the remote modelling.

10. Method according to any one of Claims 6 to 9, in which a variable representative of the tangential viscosity of the force feedback element with respect to the other element is calculated.

11. Computer programme comprising programme code means for implementing the steps of the method according to any one of Claims 6 to 10, when the said programme operates on a computer.

12. Medium capable of being read by a device for reading programme code means that are stored therein and that are able to implement the steps of the method according to any one of Claims 6 to 10, when the said programme operates on a computer.

**Patentansprüche**

1. Dynamisches Steuerungssystem (S1) eines zur Wechselwirkung mit einem anderen Element (I2) geeigneten Kraftrückkopplungselements (I1), und zwar vom Typ mit einer Zeitkonstante, die geringer ist als diejenige, welche mit einer entfernten Steuerung verbunden ist, **dadurch gekennzeichnet, dass** es umfasst:

ein lokales Modell (ML1) für die Berechnung einer für das Kraftrückkopplungselement bestimmten Anweisung ($F_e$) ausgehend von einer Variablen ($X^e$), welche durch das Kraftrückkopplungselement gemessen wird, von dem Kraftrückkopplungselement immanenten Variablen ($F^m$), von einer Steifigkeitsvariable (k), von einer Viskositätsvariable ($\lambda$) und von einer Schätzung ($\tilde{G}$) einer äußeren Wechselwirkung auf das Kraftrückkopplungselement sowie von einer Zustandsvariable ($X^{m,i}$) des Kraftrückkopplungselements,
ein entferntes Modell (MD2) für die Schätzung von Wechselwirkungen, von einer Steifigkeitsvariable, von einer Viskositätsvariable und von Zustandsvariablen des anderen Elements mit Aktualisierung beim Empfang von Daten, welche von einem anderen, entfernt gelegenen System (S2) empfangen werden, und
ein Wiederholungsmittel (R1), das geeignet ist, eine Wiederholungsmeldung ($M_n$) zum anderen System zu übertragen.

2. System nach Anspruch 1, **dadurch gekennzeichnet dass** es ein Phantommodell (MF1) umfasst, um eine Schätzung ($\hat{X}, \hat{F}$) der Zustandsvariablen des Kraftrückkopplungselements durchzuführen und um die Schätzung beim Empfang der Wiederholungsmeldung zu wiederholen.

3. System nach Anspruch 2, **dadurch gekennzeichnet, dass** das Wiederholungsmittel (R1) ein Mittel zum Vergleich der Schätzung der Zustandsvariablen vom Phantommodell und von Zustandsvariablen vom lokalen Modell umfasst, derart, dass im Falle einer Differenz, welche größer ist als ein vorbestimmter Schwellwert, das Wiederholungsmittel eine Wiederholungsmeldung zum Phantommodell (MF1) und zum anderen System (S2) sendet.

4. System nach einem der vorhergehenden Ansprüche, **dadurch gekennzeichnet, dass** es ein Extrapolationsmittel (EXT 2) umfasst, um eine vom anderen System stammende Wiederholungsmeldung zu verarbeiten und um das entfernte System zu aktualisieren.

5. Steuerungsgruppe aus zwei entfernten Elementen, wobei jedes Element mit einem Steuerungssystem nach einem der vorhergehenden Ansprüche vorgesehen ist.

6. Verfahren zur dynamischen Steuerung eines zur Wechselwirkung mit einem anderen Element geeigneten Kraftrückkopplungselements, bei dem:

   - eine lokale Modellierung durchgeführt wird, um eine für das Kraftrückkopplungselement bestimmte Anweisung zu erhalten, ausgehend von einer vom Kraftrückkopplungselement gemessenen Variablen, von dem Kraftrückkopplungselement immanenten Variablen, von einer Schätzung einer äußeren Wechselwirkung auf das Kraftrückkopplungselement von einer Steifigkeitsvariable, von einer Viskositätsvariable und von einer Zustandsvariable des Kraftrückkopplungselements;
   - eine entfernte Modellierung von Wechselwirkungen, von einer Steifigkeitsvariable, von einer Viskositätsvariable und von Zustandsvariablen des anderen Elements mit Aktualsieren beim Empfang von Daten, welche von einem anderen, entfernt gelegenen System empfangen werden, durchgeführt wird;
   - eine Wiederholungsmeldung ausgearbeitet und zum anderen System übertragen wird.

7. Verfahren nach Anspruch 6, bei dem eine Phantommodellierung von Zustandsvariablen des Krafttrückkopplungselements durchgeführt wird mit Wiederholung beim Empfang der Wiederholungsmeldung.

8. Verfahren nach Anspruch 7, bei dem bei der Wiederholung die Schätzung von von der Phantommodellierung ausgegebenen Zustandsvariablen und von von der lokalen Modellierung ausgegebenen Zustandsvariablen verglichen werden, derart, dass im Falle einer Differenz, welche größer ist als ein vorbestimmter Schwellwert eine Wiederholungsmeldung im Hinblick auf eine neue Phantommodellierung und zum anderen System gesendet wird.

9. Verfahren nach einem der Ansprüche 6 bis 8, bei dem eine Extrapolation durchgeführt wird, um eine vom anderen System stammende Wiederholungsmeldung zu verarbeiten und um eine Aktualisierung der entfernten Modellierung durchzuführen.

10. Verfahren nach einem der Ansprüche 6 bis 9, bei dem eine Variable berechnet wird, welche repräsentativ für die tangentielle Viskosität des Kraftrückkopplungselements bezüglich des anderen Elements ist.

11. Computerprogramm, das Programmcode-Mittel umfasst, um die Schritte des Verfahrens nach einem der Ansprüche 6 bis 10 zu benutzen, wenn das Programm auf einem Computer läuft.

12. Träger, der von einer Vorrichtung zum Lesen von Programmcode-Mitteln gelesen werden kann, wobei die Programmiercode-Mittel auf diesem gespeichert sind und dazu geeignet sind, die Schritte des Verfahrens nach einem der Ansprüche 6 bis 10 zu benutzen, wenn das Programm auf einem Computer läuft.

FIG.1

FIG.2

EP 1 463 980 B1

FIG.3

MD2 après recalage Ỹ
EXT2 Ȳ
MD2 sans recalage
Recalages successifs

Y

t

p   n   n+1   n+2   n+3   n+3

> seuil

Emission du message M

Réception du message M

## FIG.4

EP 1 463 980 B1

# FIG.5

Mo init

7

Mo inter

8

Mo fin

# FIG.6